# EUROPEAN PATENT SPECIFICATION

(11) **EP 3 754 450 B1**
(45) Date of publication and mention of the grant of the patent: **27.04.2022**
(21) Application number: 19180435.0
(22) Date of filing: 17.06.2019
(51) Int. Cl.: G05D 1/02

(54) **AUTONOMOUS VEHICLE MONITORING**
AUTONOME FAHRZEUGÜBERWACHUNG
SURVEILLANCE DE VÉHICULE AUTONOME

(43) Date of publication of application: 23.12.2020
(73) Proprietor: Sandvik Mining and Construction Oy, 33330 Tampere (FI)
(72) Inventor: PUURA, Jussi, 33311 Tampere (FI); von ESSEN, Tomi, 33311 Tampere (FI)
(74) Representative: Sandvik

(56) References cited:
- US-A1- 2018 165 524
- Rolf Reimar Kohlmeyer: "MODELLING AND CONTROL OF AN ARTICULATED UNDERGROUND MINING VEHICLE", , 1 November 2011 (2011-11-01), XP055651065, Retrieved from the Internet: URL:https://pdfs.semanticscholar.org/23b8/ 48c749e5c22f3807eb38efe7c995371655aa.pdf [retrieved on 2019-12-10]

## Description

### FIELD

The present invention relates to monitoring of autonomous vehicles, and in particular to monitoring articulated vehicles, such as articulated mine vehicles.

### BACKGROUND

Underground worksites, such as hard rock or soft rock mines, typically comprise a variety of operation zones intended to be accessed by different types of mobile work machines, herein referred to as mine vehicles. An underground mine vehicle may be an unmanned, e.g. remotely controlled from a control room, or a manned mine vehicle, i.e. operated by an operator sitting in a cabin of the mine vehicle. Mine vehicles operating in underground work sites may be autonomously operating, i.e. automated or semi-automated mine vehicles, which in their normal operating mode operate independently without external control but which may be taken under external control at certain operation areas or conditions, such as during states of emergencies.

Control systems monitor path of an autonomous mine vehicle on the basis of sensor input data and issue steering commands to follow a desired route. In articulated autonomous mine vehicles wheel velocity, position relative to the environment, and articulation angle, i.e. angle of joint rotation in longitudinal axis of the mine vehicle are measured on the basis of a plurality of sensors. Sensoring adds device costs and system complexity, and retrofitting of mechanical sensors may be difficult.

US2018165524 discloses generating an image of the surroundings of an articulated vehicle. According to an aspect of the invention, a processor determines a relative position between a first vehicle of an articulated vehicle and a second vehicle of the articulated vehicle; receives a first image from a first camera arranged on the first vehicle and a second image from a second camera arranged on the second vehicle; and combines the first image and the second image based on the relative position between the first vehicle and the second vehicle to generate a combined image of surroundings of the articulated vehicle.

"Modelling and control of an articulated underground mining vehicle" by Kohlmeyer, 2011, XP055651065 discloses kinematic and dynamic modelling of a vehicle.

### SUMMARY

The invention is defined by the features of the independent claims. Some specific embodiments are defined in the dependent claims.

According to a first aspect of the present invention, there is provided an apparatus, comprising means configured for performing: receiving first measurement data obtained on the basis of a first scanner coupled to a first portion of an articulated vehicle, receiving second measurement data obtained on the basis of a second scanner coupled to a second portion of the articulated vehicle, the second portion being articulably coupled to the first portion, defining orientation of the first portion on the basis of the first measurement data and orientation of the second portion on the basis of the second measurement data, and defining an angular value between the first portion and the second portion on the basis of the orientation of the first portion and the orientation of the second portion. According to an embodiment, the means comprises at least one processor; and at least one memory including computer program code, the at least one memory and computer program code configured to, with the at least one processor, cause the performance of the apparatus.

According to a second aspect of the present invention, there is provided a method for monitoring an articulated vehicle, comprising: receiving first measurement data obtained on the basis of a first scanner coupled to a first portion of an articulated vehicle, receiving second measurement data obtained on the basis of a second scanner coupled to a second portion of the articulated vehicle, the second portion being articulably coupled to the first portion, defining orientation of the first portion on the basis of the first measurement data and orientation of the second portion on the basis of the second measurement data, and defining an angular value between the first portion and the second portion on the basis of the orientation of the first portion and the orientation of the second portion.

According to a third aspect, there is provided an apparatus comprising at least one processing core, at least one memory including computer program code, the at least one memory and the computer program code being configured to, with the at least one processing core, cause the apparatus at least to: receive first measurement data obtained on the basis of a first scanner coupled to a first portion of an articulated vehicle, receiving second measurement data obtained on the basis of a second scanner coupled to a second portion of the articulated vehicle, the second portion being articulably coupled to the first portion, defining orientation of the first portion on the basis of the first measurement data and orientation of the second portion on the basis of the second measurement data, and defining an angular value between the first portion and the second portion on the basis of the orientation of the first portion and the orientation of the second portion.

According to a fourth aspect, there is provided a computer program, a computer program product or (a non-tangible) computer-readable medium comprising computer program code for, when executed in a data processing apparatus, to cause the apparatus to perform the method or an embodiment thereof.

According to an embodiment of any of the aspects, the angular value or the angular value after further processing is applied as a steering angle value of the articulated vehicle.

According to an embodiment of any of the aspects, the angular value or the angular value after further processing is provided as an input to at least one controller for the vehicle in autonomous driving mode, the at least one controller being configured to perform at least one of estimate progress of the vehicle, define or update a path for the vehicle during driving, and generate control signals for changing relation between the orientation of the first portion and the orientation of the second portion.

Further embodiments of any of the aspects are disclosed in the dependent claims and illustrated below. It will be appreciated that the embodiments may be applied with any of the aspects and in various combinations.

### BRIEF DESCRIPTION OF THE DRAWINGS

FIGURE 1 illustrates an example of a worksite;
FIGURE 2 illustrates an example of an autonomous vehicle in accordance with some embodiments;
FIGURE 3 illustrates a method according to at least some embodiments;
FIGURE 4 illustrates an example top view of an articulated vehicle; and
FIGURE 5 illustrates an example apparatus capable of supporting at least some embodiments of the present invention.

### EMBODIMENTS

The term mine vehicle herein refers generally to mobile work machines suitable to be used in the operation of different kinds of mining and/or construction excavation worksites, such as lorries, dumpers, vans, mobile rock drilling or milling rigs, mobile reinforcement machines, bucket loaders or other kind of mobile work machines which may be used in different kinds of surface and/or underground excavation worksites. Hence, the term mine vehicle is not limited in any way to vehicles only for ore mines, but the mine vehicle may be a mobile work machine used at excavation sites. The term autonomously operating (or autonomous) mine vehicle herein refers to automated or semi-automated mine vehicles, which in their autonomous operating or driving mode may operate/drive independently without requiring continuous user control but which may be taken under external control during states of emergencies, for example.

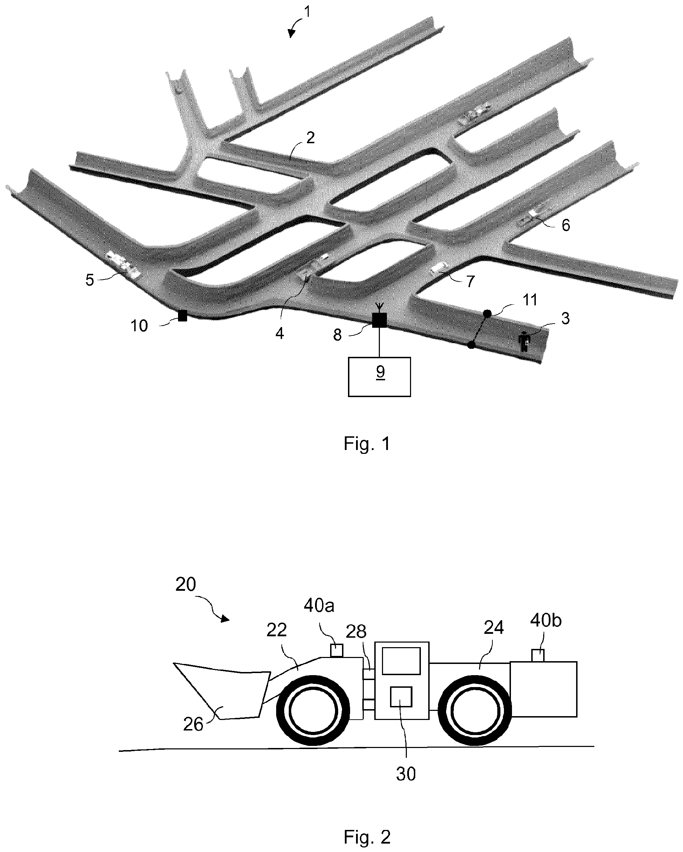

Figure 1 illustrates a simplified example of a mine 1, in the present example an underground mine comprising a network 2 of underground tunnels. A plurality of mobile objects, such as persons or pedestrians 3 and/or mine vehicles 4, 5, 6, 7 may be present in and move between different areas or operation zones of the worksite 1. At least some of the vehicles 4-7 may be articulated vehicles comprising at least two sections or portions connected by at least one joint.

The worksite 1 comprises a communications system, such as a wireless access system comprising a wireless local area network (WLAN), comprising a plurality of wireless access nodes 8. The access nodes 8 may communicate with wireless communications units comprised by the mine vehicles or carried by the pedestrians and with further communications devices (not shown), such as network device(s) configured to facilitate communications with a control system 9, which may be an on-site (underground or above-ground) and/or remote via intermediate networks. For example, a server of the system 9 may be configured to manage at least some operations at the worksite, such as provide a user interface (UI) for an operator to remotely monitor and, when needed, control automatic operation operations of the mine vehicles and/or assign work tasks for a fleet of vehicles and update and/or monitor task performance and status.

The system 9 may be connected to a further network(s) and system(s), such a worksite management system, a cloud service, an intermediate communications network, such as the internet, etc. The system may comprise or be connected to further device(s) or control unit(s), such as a handheld user unit, a vehicle unit, a worksite management device/system, a remote control and/or monitoring device/system, data analytics device/system, sensor system/device, etc.

The worksite 1 may further comprise various other types of mine operations devices 10 connectable to the control system 9 e.g. via the access node 8, not in detail illustrated in Figure 1. Examples of such further mine operations devices 10 include various devices for power supply, ventilation, air condition analysis, safety, communications, and other automation devices. For example, the worksite may comprise a passage control system comprising passage control units (PCU) 11 separating operation zones, some of which may be set-up for autonomously operating mine vehicles. The passage control system and associated PCUs may be configured to allow or prevent movement of one or more mine vehicles and/or pedestrians between zones.

Figure 2 illustrates a mine vehicle 20, in this example a loader or a load and haul (LHD) vehicle comprising a bucket 26. The mine vehicle 20 may be an articulated vehicle comprising (at least) two sections or portions 22, 24 connected by a joint 28. These portions 22, 24 may be body portions or bodies of the articulated vehicle 20. Both body portions may comprise two or more tyres. The vehicle may comprise an automatic steering system controlling steering of the vehicle based on changing articulation angle between the portions and/or controlling tyre orientation. However, it will be appreciated that the presently disclosed features may be applied in various other types of articulated mine vehicles.

The mine vehicle 20 comprises at least one control unit 30 configured to control at least some functions and/or actuators of the mine vehicle. The control unit 30 may comprise one or more computing units/processors executing computer program code stored in memory. The control unit may be connected to one or more other control units of a control system of the mine vehicle, in some embodiments by a controller area network (CAN) bus. The control unit may comprise or be connected to a user interface with a display device as well as operator input interface for receiving operator commands and information to the control unit.

In some embodiments, the control unit 30 is configured to control at least autonomous driving related operations, and there may be one or more other control units in the mine vehicle for controlling other operations. It is to be appreciated that the control unit 30 may be configured to perform at least some of the below illustrated features, or a plurality of control units or controllers may be applied to perform these features. There may be further operations modules or functions performed by the control unit(s), e.g. an automatic driving mode function, at least one positioning unit/module/function, and/or an obstacle detection function.

The mine vehicle 20 may be unmanned. Thus, the user interface may be remote from the vehicle and the vehicle may be remotely controlled by an operator in the tunnel, or in control room at the mine area or even long distance away from the mine via communications network(s). A control unit outside the mine vehicle 20, for example in the control system 9 may be configured to perform some of the below illustrated features.

The mine vehicle 20 comprises two or more scanning units, or scanners 40a, 40b, configured to perform scanning of the environment of the mine vehicle. At least one (first) scanner 40a may be arranged at/for the first portion 22 and at least one scanner 40b for the second portion 24. The scanners may be configured for monitoring surrounding environment in view of their respective portion. For example, the scanner 40a may be positioned to provide scanning data for longitudinal direction and/or sideward direction in relation to the vehicle.

In an embodiment, the scanner(s) may be 2D scanners configured to monitor tunnel walls at desired height, for example. The control unit 30 may compare operational scanned tunnel profile data to reference profile data stored in an environment model and position the mine vehicle on the basis of finding a match in the environment model to position the mine vehicle and/or correct positioning by dead-reckoning.

In some embodiments, 3D scanners are applied, in which case 3D scanning data or point cloud data is produced, which may be applied for positioning the mine vehicle. Point cloud data generated on the basis of scanning may be applied for generating and updating an environment model, such as an underground tunnel model, which may be applied for positioning the mine vehicle at the worksite. In some embodiments, the scanning results are applied to detect position and orientation of the mine vehicle and one or more further elements thereof, such as the scanner 40a, 40b or the bucket 26.

In some embodiments, the scanner(s) 40a, 40b are laser scanners. In an embodiment, the scanners are configured to define 3D scanning data on the basis of measurements on round trip time of flight of laser pulses emitted across measured surface or object. This type of remote sensing technique is also known as LiDAR (Light Detection And Ranging).

The mine vehicle 20 or the control unit 30 thereof may execute a point cloud matching functionality configured to match operational (scanned) point cloud data (being scanned by the scanner(s)) to environment model point cloud data, i.e. reference point cloud data. Position and direction of the scanning device and/or another interest point of the vehicle, such as the (leading edge of the) bucket 26, may be determined in the mine coordinate system on the basis of the detected matches between the operational point cloud data and the reference cloud data. For example, at least some of features illustrated in WO2015106799 may be applied, disclosing a system for scanning surroundings of a mine vehicle for producing data to determining position and orientation of the mine vehicle.

A driving plan, or a route plan, may define a route to be driven by the mine vehicle 20 and may be used as an input for automatic control of the mine vehicle. The plan may be generated offline and off-site, for example in an office, or on-board the mine vehicle e.g. by a teaching drive. The plan may define a start point, an end point, and a set of route points for the automatic drive. Such plan may be sent via a wired or wireless connection to, or otherwise loaded to the mine vehicle, to a memory of the mine vehicle for access by the control unit 30. In another embodiment, route points are not pre-defined, but the mine vehicle defines path and steering control to avoid obstacles during autonomous driving towards a destination point.

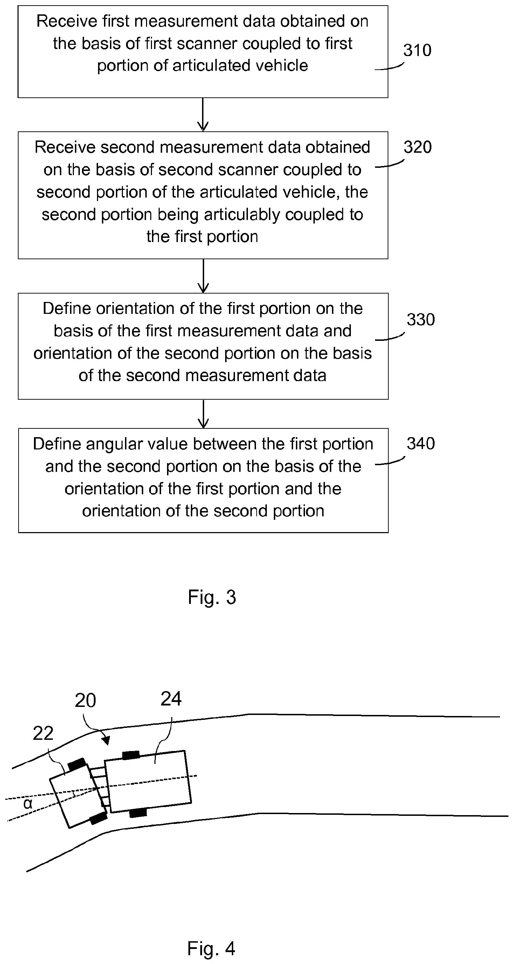

There are now provided further improvements for articulated vehicle operations particularly for autonomous driving, further illustrated below. Figure 3 illustrates a method for monitoring an articulated vehicle according to some embodiments. The method may be performed by an articulated vehicle and a controlling apparatus thereof, such as the mine vehicle 4-7, 20, and by the control unit 30 thereof.

The metho may comprise receiving 310 first measurement data (set) obtained on the basis of a first scanner coupled to a first portion of an articulated mine vehicle, such as the (body) portion 22 of the mine vehicle 20. Second measurement data (set) obtained on the basis of a second scanner coupled to a second portion of the articulated mine vehicle, such as the (body) portion 24, is received 320. The second portion is articulably coupled to the first portion, e.g. by a joint as for the mine vehicle 20.

Orientation of the first portion is defined 330 on the basis of the first measurement data and orientation of the second portion on the basis of the second measurement data. In some embodiments, the first and second (scanned) measurement data (sets) are independently mapped to the environment model and position and orientation are computed for the body portions on the basis of the mappings in relation to the environment, such as tunnel walls of an underground mine. In an embodiment, from absolute positions and orientations of the bodies (determined in relation to the environment), their relative positions are calculated.

An angular value between the first portion and the second portion is defined 340 the basis of the orientation of the first portion and the orientation of the second portion.

The angular value or the angular value after further processing may be applied as a steering angle value, or a carrier angle, of the articulated mine vehicle. With reference to Figure 4, the angular value may indicate the angle α between the orientation of the first portion 22 and the orientation of the second portion 24. In an example embodiment, an angular offset value (indicative of offset of the second portion from the first portion in horizontal plane) is determined on the basis of the defined orientations. The steering angle value may be computed on the basis of the angular offset value. The controller may be configured to perform a calibration module that calibrates the angular value (or the steering angle) by executing a bias-removing averaging function over a set of consecutive measurement results.

The angular value or the angular value after further processing as an input to at least one controller for the mine vehicle for controlling automatic or semi-automatic driving. For example, an input representative of the angular value may be provided or generated by the controller 20 at least when the vehicle is in an autonomous driving mode. The controller may be configured to perform one or more of:
- estimate progress of the mine vehicle. For example, the controller may estimate how the vehicle will progress with the current steering angle and perform further processing e.g. for collision avoidance based on this estimate.
- define or update a path for the mine vehicle during driving. For example, a path planning module may be configured to update the path of the vehicle on the basis of the updated progression of the vehicle e.g. to avoid too sharp turning.
- generate control signals for changing relation between the orientation of the first portion and the orientation of the second portion. For example, when it is detected that the current steering angle is offset from currently determined target steering angle required for the vehicle to stay on the pre-stored or dynamically generated target path, the controller may generate a control signal to vehicle steering actuator(s) for correcting the orientation to match the target steering angle.

The presently disclosed features enable to avoid specific sensor arrangement for articulation angle detection. This facilitates simplification of the overall automatic driving system and impact of such sensoring to the mechanical design of the body structure is avoided. Retrofitting an automatic driving system to a mine vehicle is also easier.

In some embodiments, the scanners 40a, 40b are configured to generate 3D point cloud data. The orientation of the first portion and/or the orientation of the second portion may be defined 330 on the basis of the 3D point cloud data and a 3D environment model of the environment, such as a tunnel model. Thus, the scanned 3D point cloud data sets of the scanners may be mapped with the environment model and the orientation (and position) may be defined for the portions on the basis of respective mapped scanned data sets.

The 3D environment model may be generated or updated on the basis of scanning data from at least one of the scanners. According to an embodiment, the mine vehicle 20 provided with the scanners is serving as a mobile surveying device. The vehicle may execute environment surveying continuously when carrying out dedicated normal operations of the vehicle. For example, the surroundings may be scanned when the vehicle stops at an unloading point. It may also be defined that the scanning is executed at least once each time when the vehicle is not moving. Thanks to this procedure, the mine may be surveyed repeatedly and in parallel to the normal operational process without any need for extra resources. The 3D model of the worksite may thus be accurate and updated continuously.

In some embodiments, position and/or orientation of the first portion and/or the second portion point are defined 330 on the basis of identifying a reference object in the first portion and/or the second portion on the basis of processing the first and/or second measurement data, such as scanned 3D point cloud data. Such reference object may be any appropriate point or sub-portion of (associated portion of) the vehicle that may be detected in the measurement data on the basis of pre-stored reference object characteristics data, such as point cloud model data. Upon detecting the reference object, the orientation and/or position of the reference object is defined. The position and/or orientation of associated portion is defined on the basis of defined orientation and/or position of the reference object. For example, a bucket or a sub-portion thereof may be detected as the reference object.

In an embodiment, orientation of the first scanner 40a and/or second scanner 40b is defined on the basis of the first and/or second measurement data. The orientation of the first portion and/or the second portion may then be defined 330 on the basis of the defined orientation of the first scanner and/or the second scanner and their relation to the respective vehicle portions 22, 24. Separate (and specific) algorithms may be performed for the first portion and the second portion, and for processing the associated first and second measurement data.

There are various further functions that be performed on the basis of the measurement data and the resulting position and/or orientation of the portion(s), some of which are further illustrated below.

Pre-stored geometry data, which may also be referred to as model data, of the first portion may be mapped with the defined position and orientation of the first portion, and/or geometry data of the second portion may be mapped with the position and orientation of the second portion. In some embodiments, the geometry data comprises point cloud data of the boom objects. Thus, the portions(s) may be modelled in their current poses and various further processing may be performed further on the basis of the environment model.

In some embodiments, a point cloud file of a body portion of the vehicle is mapped to a current pose (position and orientation) of the portion. This may be carried out by matching the point cloud with an appropriate transformation matrix (of the respective portion) and positioning the point cloud of the portion in correct start pose based on the transformation matrix. Thus, the space required by the bodies may be positioned directly in correct position and orientation in view of detected walls and other obstacles.

Collision avoidance control may be performed on the basis of modelled first and/or second portion, i.e. geometry data of the first and/or second portion mapped with the defined position and orientation of the first and/or second portion. The scanner(s) 40a, 40b may provide scanning data of obstacles which may be compared to the modelled poses of the first and/or second object (or the position of the object(s). If it is detected that (a portion of) the vehicle 20 is (or will be) too close to an obstacle, e.g. a safety distance threshold value, a corrected path and/or steering control action may be defined. A control signal associated with the corrective action may then be sent to steering control actuators, causing change of the steering angle and the angle between the first portion and the second portion.

A first prediction of position and/or orientation of the first portion may be defined on the basis of the first measurement data. Similarly, a second prediction of position and/or orientation of the second portion may be defined on the basis of the second measurement data. The predictions may be applied for various purposes, such as collision avoidance control illustrated above. In an embodiment, the predictions are applied for compensating computational timing difference between computations for the first portion and the second portion.

It is to be appreciated that various further features may be complement or differentiate at least some of the above-illustrated embodiments. For example, there may be further user interaction and/or automation functionality further facilitating the operator to monitor and/or control the status of the mine vehicle and autonomous driving actions thereof. For example, the status of the vehicle, including the defined orientation of the first portion and the second portion, may be displayed in a user interface (UI) of the vehicle and/or a remote unit.

Although embodiments were illustrated above in connection with mine vehicles, it is to be appreciated that the presently disclosed features may be applied also in connection with other types of articulated vehicles, including various types of articulated loader machines, hauler machines, compactors, excavators, and demolition machines, for example.

An electronic device comprising electronic circuitries may be an apparatus for realizing at least some embodiments of the present invention, such as the operations illustrated in connection with Figure 3. The apparatus may be comprised in at least one computing device connected to or integrated into a control system of a mine vehicle, such as the vehicle 20. Such control system may be an intelligent on-board control system controlling operation of various sub-systems of the vehicle, such as a hydraulic system, a motor, a transmission system, etc. Such control systems are often distributed and include many independent modules connected by a bus system of controller area network (CAN) nodes, for example. In some embodiments, the apparatus is add-on instrumentation to a mine vehicle.

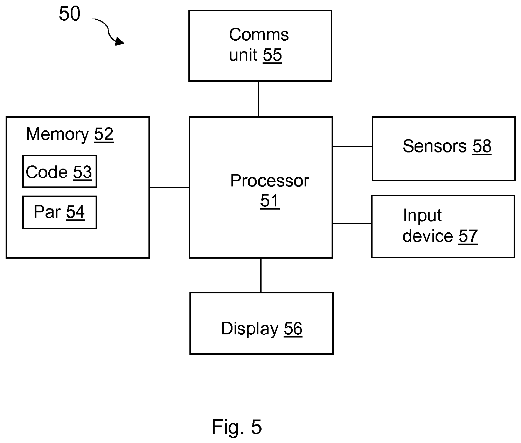

Figure 5 illustrates an example apparatus capable of supporting at least some embodiments of the present invention. Illustrated is a device 50, which may comprise or implement the control unit 20 illustrated above. The device may be configured to carry out at least some of the embodiments relating to the defining the orientation relation between the vehicle portions.

Comprised in the device 50 is a processor 51, which may comprise, for example, a single- or multi-core processor wherein a single-core processor comprises one processing core and a multi-core processor comprises more than one processing core. The processor 51 may comprise more than one processor. The processor may comprise at least one application-specific integrated circuit, ASIC. The processor may comprise at least one field-programmable gate array, FPGA. The processor may be means for performing method steps in the device. The processor may be configured, at least in part by computer instructions, to perform actions.

The device 50 may comprise memory 52. The memory may comprise random-access memory and/or permanent memory. The memory may be at least in part accessible to the processor 51. The memory may be at least in part comprised in the processor 51. The memory may be at least in part external to the device 50 but accessible to the device. The memory 52 may be means for storing information and parameters 54 affecting operations of the device, such as the environment model and parameters controlling at least some of the operations illustrated above. The memory may comprise computer program code 53 including computer instructions that the processor is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions.

The device 50 may comprise a communications unit 55 comprising a transmitter and/or a receiver. The transmitter and the receiver may be configured to transmit and receive, respectively, information in accordance with at least one cellular or non-cellular standard. The transmitter and/or receiver may be configured to operate in accordance with global system for mobile communication, GSM, wideband code division multiple access, WCDMA, long term evolution, LTE, 3GPP new radio access technology (N-RAT), IS-95, wireless local area network, WLAN, and/or Ethernet standards, for example. The device 50 may comprise a near-field communication, NFC, transceiver. The NFC transceiver may support at least one NFC technology, such as NFC, Bluetooth, Wibree or similar technologies.

The device 50 may comprise or be connected to a UI. The UI may comprise at least one of a display 56, a speaker, an input device 57 such as a keyboard, a joystick, a touchscreen, and a microphone. A user may operate the device and the vehicle via the UI, for example to drive the vehicle and operate a tool thereof, change display views, control loading/unloading actions, etc.

The device 50 may further comprise and/or be connected to further units, devices and systems, such as one or more sensor devices 58, such as the scanner(s) 40a, 40b, or other sensor devices sensing environment of the device 50 or properties of the vehicle, for example wheel rotation.

The processor 51, the memory 52, the communications unit 55 and the UI may be interconnected by electrical leads internal to the device 50 in a multitude of different ways. For example, each of the aforementioned devices may be separately connected to a master bus internal to the device, to allow for the devices to exchange information.

It is to be understood that the embodiments of the invention disclosed are not limited to the particular structures, process steps, or materials disclosed herein, but are extended to equivalents thereof as would be recognized by those ordinarily skilled in the relevant arts.

Various described features, structures, or characteristics may be combined in any suitable manner in one or more embodiments. While the forgoing examples are illustrative of the principles of the present invention in one or more particular applications.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

## Claims

1. An apparatus, comprising means configured for performing:
- receiving (310) first measurement data obtained on the basis of a first scanner coupled to a first portion of an articulated vehicle (20),
- receiving (320) second measurement data obtained on the basis of a second scanner coupled to a second portion of the articulated vehicle, the second portion being articulably coupled to the first portion,
- defining (330) orientation of the first portion on the basis of the first measurement data and orientation of the second portion on the basis of the second measurement data,
- defining (340) an angular value between the first portion and the second portion on the basis of the orientation of the first portion and the orientation of the second portion, and
- applying the angular value or the angular value after further processing as a steering angle value of the articulated vehicle.

2. The apparatus of claim 1, wherein the means are further configured to provide the angular value or the angular value after further processing as an input to at least one controller (30) for the vehicle in autonomous driving mode, the at least one controller being configured to perform at least one of estimate progress of the vehicle, define or update a path for the vehicle during driving, and generate control signals for changing relation between the orientation of the first portion and the orientation of the second portion.

3. The apparatus of any preceding claim, wherein the scanners are configured to generate three-dimensional point cloud data and the means are further configured for performing: defining (330) the orientation of the first portion and/or the orientation of the second portion on the basis of the three-dimensional point cloud data and a three-dimensional environment model.

4. The apparatus of claim 3, wherein the means are further configured for generating or updating the three-dimensional environment model on the basis of scanning data from at least one of the scanners.

5. The apparatus of any preceding claim, wherein the means are further configured for defining position and orientation of the first portion and/or the second portion point on the basis of detecting a reference object in the first portion and/or the second portion in the three-dimensional scanning data.

6. The apparatus of any preceding claim, wherein the means are further configured for performing:
- defining orientation of the first scanner on the basis of the first measurement data,
- defining the orientation of the first portion on the basis of the orientation of the first scanner,
- defining orientation of the second scanner on the basis of the second measurement data, and
- defining the orientation of the second portion on the basis of the orientation of the second scanner.

7. The apparatus of any preceding claim, wherein the means are further configured for performing collision avoidance control on the basis of geometry data of the first portion mapped with the position and orientation of the first portion and geometry data of the second portion mapped with the position and orientation of the second portion.

8. The apparatus of any preceding claim, wherein the means are further configured for:
- generating a first prediction of position and/or orientation of the first portion on the basis of the first measurement data and a second prediction of position and/or orientation of the second portion on the basis of the second measurement data, and
- applying the first prediction and the second prediction for compensating computational timing difference between computations for the first portion and the second portion.

9. An underground articulated vehicle (20), comprising a first body portion (22) and a second body portion (24), the second body portion being articulably coupled to the first body portion, a first scanner (40a) coupled to the first body portion, and a second scanner (40b) coupled to the second body portion, wherein the machine comprises the apparatus according to any one of claims 1 to 8.

10. The underground articulated vehicle of claim 9, wherein the vehicle is one of an underground loading device, an underground hauling device, an underground drilling machine, and an underground continuous mining device.

11. A method comprising:
- receiving (310) first measurement data obtained on the basis of a first scanner coupled to a first portion of an articulated vehicle (20),
- receiving (320) second measurement data obtained on the basis of a second scanner coupled to a second portion of the articulated vehicle, the second portion being articulably coupled to the first portion,
- defining (330) orientation of the first portion on the basis of the first measurement data and orientation of the second portion on the basis of the second measurement data,
- defining (340) an angular value between the first portion and the second portion on the basis of the orientation of the first portion and the orientation of the second portion, and
- applying the angular value or the angular value after further processing as a steering angle value of the articulated vehicle.

12. The method of claim 11, wherein the angular value or the angular value after further processing is provided as an input to at least one controller for the vehicle in autonomous driving mode, the at least one controller being configured to perform at least one of estimate progress of the vehicle, define or update a path for the vehicle during driving, and generate control signals for changing relation between the orientation of the first portion and the orientation of the second portion.

13. The method of claim 11 or 12, wherein the scanners generate three-dimensional point cloud data and the orientation of the first portion and/or the orientation of the second portion is defined on the basis of the three-dimensional point cloud data and a three-dimensional environment model.

14. A computer program comprising code for, when executed in a data processing apparatus (51), to cause a method in accordance with claim 11or 12 to be performed.

## Patentansprüche

1. Einrichtung, umfassend Mittel, die zum Durchführen von Folgendem konfiguriert sind:
- Empfangen (310) erster Messdaten, die auf der Basis eines ersten Abtasters erhalten werden, der mit einem ersten Abschnitt eines Gelenkfahrzeugs (20) gekoppelt ist,
- Empfangen (320) zweiter Messdaten, die auf der Basis eines zweiten Abtasters erhalten werden, der mit einem zweiten Abschnitt des Gelenkfahrzeugs gekoppelt ist, wobei der zweite Abschnitt anlenkbar mit dem ersten Abschnitt gekoppelt ist,
- Definieren (330) einer Ausrichtung des ersten Abschnitts auf der Basis der ersten Messdaten und einer Ausrichtung des zweiten Abschnitts auf der Basis der zweiten Messdaten,
- Definieren (340) eines Winkelwerts zwischen dem ersten Abschnitt und dem zweiten Abschnitt auf der Basis der Ausrichtung des ersten Abschnitts und der Ausrichtung des zweiten Abschnitts, und
- Anwenden des Winkelwerts oder des Winkelwerts nach weiterem Verarbeiten als einen Lenkwinkelwert des Gelenkfahrzeugs.

2. Einrichtung nach Anspruch 1, wobei die Mittel weiter konfiguriert sind, den Winkelwert oder den Winkelwert nach weiterem Verarbeiten als einen Eingang zu mindestens einer Steuereinheit (30) für das Fahrzeug im autonomen Fahrtmodus bereitzustellen, wobei die mindestens eine Steuereinheit konfiguriert ist, mindestens eines von Schätzen von Fortschritt des Fahrzeugs, Definieren oder Aktualisieren eines Pfads für das Fahrzeug während des Fahrens und Erzeugen von Steuersignalen zum Ändern von Relation zwischen der Ausrichtung des ersten Abschnitts und der Ausrichtung des zweiten Abschnitts durchzuführen.

3. Einrichtung nach einem vorstehenden Anspruch, wobei die Abtaster konfiguriert sind, dreidimensionale Punktwolkendaten zu erzeugen und weiter konfiguriert sind, Folgendes durchzuführen: Definieren (330) der Ausrichtung des ersten Abschnitts und/oder der Ausrichtung des zweiten Abschnitts auf der Basis der dreidimensionalen Punktwolkendaten und eines dreidimensionalen Umgebungsmodells.

4. Einrichtung nach Anspruch 3, wobei die Mittel weiter konfiguriert sind, das dreidimensionale Umgebungsmodell auf der Basis von Abtastungsdaten von mindestens einem der Abtaster zu erzeugen oder aktualisieren.

5. Einrichtung nach einem vorstehenden Anspruch, wobei die Mittel weiter konfiguriert sind, Position und Ausrichtung des ersten Abschnitts- und/oder des zweiten Abschnittspunkts auf der Basis vom Erfassen eines Bezugsobjekts in dem ersten Abschnitt und/oder dem zweiten Abschnitt in den dreidimensionalen Abtastungsdaten zu definieren.

6. Einrichtung nach einem vorstehenden Anspruch, wobei die Mittel weiter konfiguriert sind, Folgendes durchzuführen:
- Definieren einer Ausrichtung des ersten Abtasters auf der Basis der ersten Messdaten,
- Definieren der Ausrichtung des ersten Abschnitts auf der Basis der Ausrichtung des ersten Abtasters,
- Definieren einer Ausrichtung des zweiten Abtasters auf der Basis der zweiten Messdaten, und
- Definieren der Ausrichtung des zweiten Abschnitts auf der Basis der Ausrichtung des zweiten Abtasters.

7. Einrichtung nach einem vorstehenden Anspruch, wobei die Mittel weiter konfiguriert sind, Kollisionsvermeidungssteuerung auf der Basis von Geometriedaten des ersten Abschnitts, die auf die Position und Ausrichtung des ersten Abschnitts abgebildet sind, und Geometriedaten des zweiten Abschnitts, die auf die Position und Ausrichtung des zweiten Abschnitts abgebildet sind, durchzuführen.

8. Einrichtung nach einem vorstehenden Anspruch, wobei die Mittel weiter für Folgendes konfiguriert sind:
- Erzeugen einer ersten Vorhersage von Position und/oder Ausrichtung des ersten Abschnitts auf der Basis der ersten Messdaten und einer zweiten Vorhersage von Position und/oder Ausrichtung des zweiten Abschnitts auf der Basis der zweiten Messdaten, und
- Anwenden der ersten Vorhersage und der zweiten Vorhersage zum Kompensieren von Berechnungsablaufdifferenz zwischen Berechnungen für den ersten Abschnitt und den zweiten Abschnitt.

9. Untergrundgelenkfahrzeug (20), umfassend einen ersten Karosserieabschnitt (22) und einen zweiten Karosserieabschnitt (24), wobei der zweite Karosserieabschnitt anlenkbar mit dem ersten Karosserieabschnitt gekoppelt ist, einen ersten Abtaster (40a), der mit dem ersten Karosserieabschnitt gekoppelt ist, und einen zweiten Abtaster (40b), der mit dem zweiten Karosserieabschnitt gekoppelt ist, wobei die Maschine die Einrichtung nach einem der Ansprüche 1 bis 8 umfasst.

10. Untergrundgelenkfahrzeug nach Anspruch 9, wobei das Fahrzeug eines von einer Untergrundlastvorrichtung, einer Untergrundschleppvorrichtung, einer Untergrundbohrmaschine und einer Untergrunddauerfördervorrichtung ist.

11. Verfahren, das Folgendes umfasst:
- Empfangen (310) erster Messdaten, die auf der Basis eines ersten Abtasters erhalten werden, der mit einem ersten Abschnitt eines Gelenkfahrzeugs (20) gekoppelt ist,
- Empfangen (320) zweiter Messdaten, die auf der Basis eines zweiten Abtasters erhalten werden, der mit einem zweiten Abschnitt des Gelenkfahrzeugs gekoppelt ist, wobei der zweite Abschnitt anlenkbar mit dem ersten Abschnitt gekoppelt ist,
- Definieren (330) einer Ausrichtung des ersten Abschnitts auf der Basis der ersten Messdaten und einer Ausrichtung des zweiten Abschnitts auf der Basis der zweiten Messdaten,
- Definieren (340) eines Winkelwerts zwischen dem ersten Abschnitt und dem zweiten Abschnitt auf der Basis der Ausrichtung des ersten Abschnitts und der Ausrichtung des zweiten Abschnitts, und
- Anwenden des Winkelwerts oder des Winkelwerts nach weiterem Verarbeiten als einen Lenkwinkelwert des Gelenkfahrzeugs.

12. Verfahren nach Anspruch 11, wobei der Winkelwert oder der Winkelwert nach weiterem Verarbeiten als ein Eingang zu mindestens einer Steuereinheit für das Fahrzeug im autonomen Fahrtmodus bereitgestellt ist, wobei die mindestens eine Steuereinheit konfiguriert ist, mindestens eines von Schätzen von Fortschritt des Fahrzeugs, Definieren oder Aktualisieren eines Pfads für das Fahrzeug während des Fahrens und Erzeugen von Steuersignalen zum Ändern von Relation zwischen der Ausrichtung des ersten Abschnitts und der Ausrichtung des zweiten Abschnitts durchzuführen.

13. Verfahren nach Anspruch 11 oder 12, wobei die Abtaster dreidimensionale Punktwolkendaten erzeugen und die Ausrichtung des ersten Abschnitts und/oder die Ausrichtung des zweiten Abschnitts auf der Basis der dreidimensionalen Punktwolkendaten und einem dreidimensionalen Umgebungsmodell definiert wird.

14. Computerprogramm, das einen Code umfasst, der, wenn er in einer Datenverarbeitungseinrichtung (51) ausgeführt wird, veranlasst, dass ein Verfahren nach Anspruch 11 oder 12 durchgeführt wird.

## Revendications

1. Appareil, comprenant des moyens configurés pour effectuer :
- la réception (310) de premières données de mesure obtenues sur la base d'un premier dispositif de balayage couplé à une première partie d'un véhicule articulé (20),
- la réception (320) de secondes données de mesure obtenues sur la base d'un second dispositif de balayage couplé à une seconde partie du véhicule articulé, la seconde partie étant couplée de manière articulée à la première partie,
- la définition (330) de l'orientation de la première partie sur la base des premières données de mesure et de l'orientation de la seconde partie sur la base des secondes données de mesure,
- la définition (340) d'une valeur angulaire entre la première partie et la seconde partie sur la base de l'orientation de la première partie et de l'orientation de la seconde partie, et
- l'application de la valeur angulaire ou de la valeur angulaire après un traitement supplémentaire en tant que valeur d'angle de braquage du véhicule articulé.

2. Appareil selon la revendication 1, dans lequel les moyens sont configuré en outre pour fournir la valeur angulaire ou la valeur angulaire après un traitement supplémentaire en tant qu'entrée à au moins un dispositif de commande (30) pour le véhicule dans un mode de conduite autonome, le au moins un dispositif de commande étant configuré pour effectuer au moins l'un parmi estimer la progression du véhicule, définir ou mettre à jour un trajet pour le véhicule pendant la conduite, et générer des signaux de commande pour modifier la relation entre l'orientation de la première partie et l'orientation de la seconde partie.

3. Appareil selon une quelconque revendication précédente, dans lequel les dispositifs de balayage sont configurés pour générer des données tridimensionnelles en nuage de points et les moyens sont configurés en outre pour effectuer : la définition (330) de l'orientation de la première partie et/ou de l'orientation de la seconde partie sur la base des données tridimensionnelles en nuage de points et d'un modèle d'environnement tridimensionnel.

4. Appareil selon la revendication 3, dans lequel les moyens sont configurés en outre pour générer ou mettre à jour le modèle d'environnement tridimensionnel sur la base de données de balayage provenant au moins de l'un des dispositifs de balayage.

5. Appareil selon une quelconque revendication précédente, dans lequel les moyens sont configurés en outre pour définir une position et une orientation de la première partie et/ou de la seconde partie sur la base de la détection d'un objet de référence dans la première partie et/ou la seconde partie dans les données tridimensionnelles de balayage.

6. Appareil selon une quelconque revendication précédente, dans lequel les moyens sont configurés en outre pour effectuer :
- la définition de l'orientation du premier dispositif de balayage sur la base des premières données de mesure,
- la définition de l'orientation de la première partie sur la base de l'orientation du premier dispositif de balayage,
- la définition de l'orientation du second dispositif de balayage sur la base des secondes données de mesure, et
- la définition de l'orientation de la seconde partie sur la base de l'orientation du second dispositif de balayage.

7. Appareil selon une quelconque revendication précédente, dans lequel les moyens sont configurés en outre pour effectuer une commande d'évitement de collision sur la base de données géométriques de la première partie mappées avec la position et l'orientation de la première partie et de données géométriques de la seconde partie mappées avec la position et l'orientation de la seconde partie.

8. Appareil selon une quelconque revendication précédente, dans lequel les moyens sont configurés en outre pour :
- générer une première prédiction de position et/ou d'orientation de la première partie sur la base des premières données de mesure et une seconde prédiction de position et/ou d'orientation de la seconde partie sur la base des secondes données de mesure, et
- appliquer la première prédiction et la seconde prédiction pour compenser une différence de synchronisation de calcul entre les calculs pour la première partie et la seconde partie.

9. Véhicule articulé souterrain (20), comprenant une première partie de corps (22) et une seconde partie de corps (24), la seconde partie de corps étant couplée de manière articulée à la première partie de corps, un premier dispositif de balayage (40a) couplé à la première partie de corps, et un second dispositif de balayage (40b) couplé à la seconde partie de corps, dans lequel la machine comprend l'appareil selon l'une quelconque des revendications 1 à 8.

10. Véhicule articulé souterrain selon la revendication 9, dans lequel le véhicule est l'un parmi un dispositif souterrain de chargement, un dispositif souterrain de transport, une foreuse souterraine et un dispositif souterrain à extraction continu.

11. Procédé comprenant :
- la réception (310) de premières données de mesure obtenues sur la base d'un premier dispositif de balayage couplé à une première partie d'un véhicule articulé (20),
- la réception (320) de secondes données de mesure obtenues sur la base d'un second dispositif de balayage couplé à une seconde partie du véhicule articulé, la seconde partie étant couplée de manière articulée à la première partie,
- la définition (330) de l'orientation de la première partie sur la base des premières données de mesure et de l'orientation de la seconde partie sur la base des secondes données de mesure,
- la définition (340) d'une valeur angulaire entre la première partie et la seconde partie sur la base de l'orientation de la première partie et de l'orientation de la seconde partie, et
- l'application de la valeur angulaire ou de la valeur angulaire après un traitement supplémentaire en tant que valeur d'angle de braquage du véhicule articulé.

12. Procédé selon la revendication 11, dans lequel la valeur angulaire ou la valeur angulaire après un traitement supplémentaire est fournie en tant qu'entrée à au moins un dispositif de commande pour le véhicule dans un mode de conduite autonome, le au moins un dispositif de commande étant configuré pour effectuer au moins l'un parmi estimer la progression du véhicule, définir ou mettre à jour un trajet pour le véhicule pendant la conduite, et générer des signaux de commande pour modifier la relation entre l'orientation de la première partie et l'orientation de la seconde partie.

13. Procédé selon la revendication 11 ou 12, dans lequel les dispositifs de balayage génèrent des données tridimensionnelles en nuage de points et l'orientation de la première partie et/ou l'orientation de la seconde partie sont définies sur la base des données tridimensionnelles en nuage de points et d'un modèle d'environnement tridimensionnel.

14. Programme informatique comprenant un code pour amener, lorsqu'il est exécuté dans un appareil de traitement de données (51), la mise en œuvre d'un procédé selon la revendication 11 ou 12.
